Europäisches Patentamt

(19) European Patent Office

Office européen des brevets

(11) Publication number: 0 080 698

A2

(12) EUROPEAN PATENT APPLICATION

(21) Application number: 82110876.8

(22) Date of filing: 24.11.82

(51) Int. Cl.³: B 29 D 27/02
B 29 B 1/06

(30) Priority: 01.12.81 IT 2537981

(43) Date of publication of application:
08.06.83 Bulletin 83/23

(84) Designated Contracting States:
AT DE FR GB SE

(71) Applicant: IMPIANTI OMS S.p.A.
Via Sabbionetta
I-20050 Verano Brianza (Prov. of Milano)(IT)

(72) Inventor: Riva, Paolo
Via Pastore, 79
I-20034 Giussano (Milano)(IT)

(72) Inventor: Mariani, Vittorio
Via Stefano, 28
I-20038 Seregno (Milano)(IT)

(74) Representative: Modiano, Guido et al,
MODIANO, JOSIF, PISANTY & STAUB Modiano &
Associati Via Meravigli, 16
I-20123 Milan(IT)

(54) High pressure injection head for plastics materials.

(57) The high pressure injection head comprises an elongate configuration cross-section mixing chamber (1) wherein a self-cleaning piston (2), having a cross-sectional configuration matching that of the mixing chamber, can be moved in sealed relationship, the injectors (10) of the head being arranged in opposing relationship at flat areas of minimal mutual distance.

COMPLETE DOCUMENT ./...

Fig.1

This invention relates to a high pressure injection head for plastics materials.

As is known, high pressure injection heads include a mixing chamber wherein a self-cleaning piston can be caused to move, said piston performing the functions, both prior to and at the end of each injection steps, of shutting off the communication to the injectors and removing the material present in the mixing chamber.

High pressure injection heads provide deflection of the flow of material from the feed circuit to effect the so-called recycling step when no injection occurs in the mixing chamber, said recycling step taking place in accordance with two discrete operating procedures which may be defined as out-of-head recycle and in-head recycle.

The heads with out-of-head recycle are arranged to deflect the oncoming flow of components prior to their introduction into the mixing chamber, by directing the plasticsmaterial component feed lines to a material recycle conduit.

The heads with in-head recycle are instead provided with recycle channels which are arranged directly within the mixing chamber, and for example, directly in the self-cleaning piston which, according to the position occupied, can allow either the material injection step or recycle step.

All of the above embodiments require that the injectors can be kept as close together as possible, such that as the mutual distance decreases during the injection step, an improved and more complete mixing can take place.

However, this requirement meets opposition in the fact that it is not possible to reduce, beyond certain limits, the useful cross-section of the self-cleaning piston which slides inside the mixing chamber, because the piston would otherwise be rendered mechanically weak, while the reduced cross-section area, for the same flow rate, would result in an unacceptable increase of the plastic material flow velocity from the mixing chamber, with attendant increase in the material turbulence, which could produce flaws in the pieces being processed; furthermore, as the injection is carried out with an open mold, an excessively high velocity may result in material splashing, impact flaws, etc.

Solutions adopted heretofore, which make use of a circular cross-section self-cleaning piston, provide, in order to allow the injectors to be kept relatively close together and attenuate the adverse effects of velocity, additional chambers located downstream of the mixing chamber proper, possibly having their axes set at an angle to the mixing chamber.

Another approach, disclosed in German Patent No. 2,815,460, teaches the use of a translatable piston inside the mixing chamber which incorporates the recycling conduits, within said piston there being arranged for sliding movement a circular cross-section self-cleaning piston.

With this approach, the recycling piston is given an oval cross-section purposely intended to prevent the piston from rotating about its own axis. In accordance with that embodiment, the injectors are arranged in opposing relationship along the minor axis of the oval cross-section, but even with this expedient the mutual distance between the injectors is quite large owing to the presence of both the recycling piston and self-cleaning piston which still has a circular cross-section.

Accordingly the task of this invention is to solve the foregoing problem by providing a high pressure injection head for plastic materials, whereby the mutual distance separating the injectors can be minimized, thus promoting a more intimate and uniform mixing of the reaction components without in any way jeopardizing the piston strength, and while affording an increased cross-sectional area of the mixing chamber to stop or at least minimize the turbulence generated through the material during the injection step and its outflow velocity into the mold.

Within this task it is an object of the invention to provide an injection head, wherein the self-cleaning piston is arranged to provide a thorough cleaning of the injector nozzles across the injection area of the injectors, without involving any special shaping of the injector shutter tips, as is instead carried out with approaches where the injector tip must be shaped to a cylindrical configuration combined with the self-cleaning piston having a circular cross-section with different diameters.

A further object of this invention is to provide a high pressure injection head which brings about a substantially simplified construction with highly functional features.

According to one aspect of the invention the above task and objects, as well as yet other objects, such as will be apparent hereinafter, are achieved by a high pressure injection head for plastics materials, comprising a mixing chamber wherein a self-cleaning piston is arranged to be movable, characterized in that said mixing chamber has an elongate cross-sectional configuration with the injectors arranged in opposing relationship at locations of minimum mutual distance, inside said mixing chamber there being movable in sealed relationship said self-cleaning piston provided with a cross-sectional configuration matching said mixing chamber cross-sectional configuration.

Further features and advantages will be more apparent from the following description of a preferred, but not limitative, embodiment of a high pressure injection head for plastics materials, as illustrated by way of example only in the accompanying drawing, where:

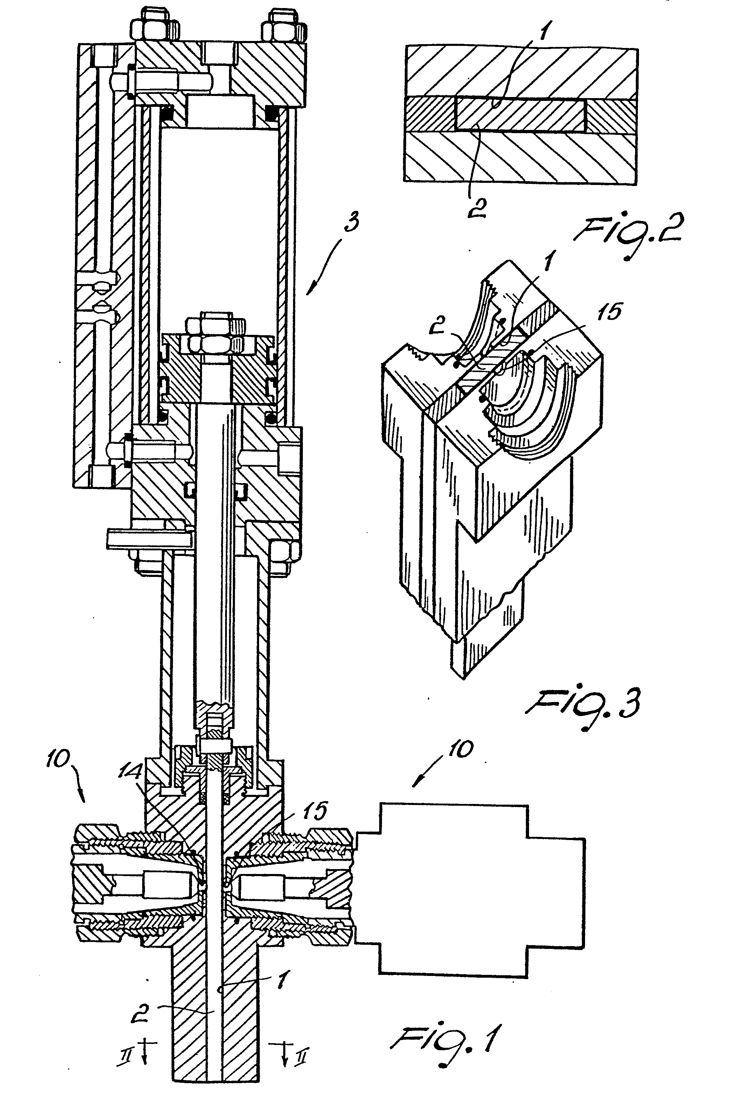

Figure 1 is a sectional view of the high pressure injection head according to the invention;

Figure 2 is a sectional view taken along the line II-II of Figure 1; and

Figure 3 is a partly cut-away perspective view showing in detail the mixing chamber and self-cleaning piston.

Making reference to the drawing figures, the high pressure injection head of this invention comprises a mixing chamber 1, on the interior whereof a self-cleaning piston 2 is arranged to slide which is connected, for its axial travel movement in said mixing chamber 1, to a drive cylinder 3 which may be actuated directly by one of the reaction components.

Provided on said mixing chamber are at least two injectors, generally designated with the reference numeral 10, which injectors are, in the exemplary embodiment shown, of the type for out-of-head recycle heads, that is    therein   · the component introduced by the injector   is  delivered to the injector intake port located at an intake port 15 opened to the mixing chamber interior, or possibly diverted to the recycling conduits.

While the exemplary embodiment shown includes an out-of-head recycle head, in principle the invention may also be applied to a head with the so-called in-head recycle.

The peculiar aspect of the invention is that the mixing chamber 1 has an elongate cross-sectional configuration with the injectors 10 arranged in opposing relationship at locations of minimum mutual distance, thereby the mixing of the components which are being introduced one against the other into the mixing chamber and hence into the mold is made more thorough and uniform.

Advantageously, it has been found that a preferred configuration for the mixing chamber is one with a rectangular cross-section and the injector nozzles positioned juxtaposed at a middle location along the major side, so as to minimize the mutual distance between the injector nozzles.

This solution is also advantageous in that the self-cleaning piston 2, which would also have a rectangular configuration, i.e. one matching the cross-section of the mixing chamber 1, during the downward stroke which follows the mixing and injection steps, scrapes the tips 14 of the injector shutters such as to remove any residual material therefrom.

The above arrangement is particularly advantageous because the self-cleaning piston side facing the injectors can be made flat, thus making special or complex machining of the injector shutter tips, such as is required conventionally, quite unnecessary.

According to a preferred embodiment of the invention, the major side of the mixing chamber stands to the minor side thereof in a ratio ranging preferably from 3 to 5, said ratio being selected to suit the materials being handled and individual processing requirements.

Thus, with the arrangement described hereinabove, the advantage can be secured of having a large section mixing chamber, and hence the possibility of avoiding an undue increase of the material outflow velocity during the injection step, while keeping the distance between the injectors quite small.

While the rectangular cross-section configuration has shown to be the most advantageous one, it would also be possible, in principle, to use other elongate shape configurations, such as an oval shape, a shape with plane-parallel faces joined together by circular portions, or any other shapes having a major dimension along a perpendicular direction to their minor dimension.

It will be appreciated from the foregoing that the invention achieves its objects, and in particular, it should be pointed out that, as mentioned above, the high pressure injection head according to this invention affords the achievement of uniform and thorough mixing with the injectors located closer to one another, without involving constructional difficulties as concerns the self-cleaning piston.

The invention as described is susceptible to many modifications and variations without departing from the scope of this inventive concept.

Moreover, all of the details may be replaced with other technically equivalent elements.

In practicing the invention, the materials used, provided that they are compatible with the specific application, and the dimensions and contingent shapes may be any suitable ones to meet individual requirements.

## CLAIMS

1. A high pressure injection head for plastic materials, comprising a mixing chamber wherein a self-cleaning piston is arranged to be movable, characterized in that said mixing chamber (1) has an elongate cross-sectional configuration with the injectors (10) arranged in opposing relationship at locations of minimum mutual distance, inside said mixing chamber there being movable in sealed relationship said self-cleaning piston (2) provided with a cross-sectional configuration matching said mixing chamber (1) cross-sectional configuration.

2. A high pressure injection head for plastics materials according to Claim 1, characterized in that said locations where said injectors (10) are arranged are flat areas.

3. A high pressure injection head for plastics materials according to the preceding claims, characterized in that said mixing chamber (1) and said self-cleaning piston (2) have a substantially rectangular cross-sectional configuration.

4. A high pressure injection head for plastics materials according to one or more of the preceding claims, characterized in that said mixing chamber (1) and said self-cleaning piston (2) show in cross-section a major axis to minor axis ratio in the 3 to 5 range.

5. A high pressure injection head for plastics materials, according to any preceding claims, characterized in that it comprises one or more of the characteristics hereinabove described and/or illustrated in the accompanying drawings.

0080698

Fig.2

Fig.3

Fig.1